Europäisches Patentamt

European Patent Office

Office européen des brevets

(11) Publication number: **0 030 468**
**A1**

# (12) EUROPEAN PATENT APPLICATION

(21) Application number: **80304411.4**

(22) Date of filing: **05.12.80**

(51) Int. Cl.³: **H 02 P 13/30**

(30) Priority: **05.12.79 GB 7941979**

(43) Date of publication of application: **17.06.81**
**Bulletin 81/24**

(84) Designated Contracting States: **AT BE CH DE FR GB IT LI LU NL SE**

(71) Applicant: **Langham, Eric Miles, Hill House Buxton Road Frettenham, Norwich Norfolk (GB)**
Applicant: **Hrynkiewicz, Stanislav, 13 St. Michael's Way Long Stratton, Norwich Norfolk (GB)**

(72) Inventor: **Langham, Eric Miles, Hill House Buxton Road Frettenham, Norwich Norfolk (GB)**
Inventor: **Hrynkiewicz, Stanislav, 13 St. Michael's Way Long Stratton, Norwich Norfolk (GB)**

(74) Representative: **Horton, Andrew Robert Grant et al, BOULT, WADE & TENNANT 27 Furnival Street, London, EC4A 1PQ (GB)**

(54) **Cycloconverters and methods of operating them.**

㊗ A cycloconverter includes a microprocessor which governs the order of firing of the controlled rectifiers of the cycloconverter in order to produce an output of selected form or frequency. The order of firing may be different from that of the sequence of the supply phases and the microprocessor may change from one programme to another and change the order of firing in order to adjust the output frequency or voltage in order, for example, to control the speed of any suitable alternating current machine such as a squirrel-cage induction motor.

"CYCLOCONVERTERS AND METHODS OF OPERATING

THEM"

This invention relates to frequency changing,
to the driving of synchronous A.C. machines or
asynchronous machines such as squirrel-cage induction
motors and generally to at least all those uses to
which a cycloconverter might be put.

One purpose of the invention is the provision
of an improved and more versatile cycloconverter.
Another purpose is the synthesis of higher frequencies
than are normally feasible using a cycloconverter without
the confusion of the desired output power signal by
unwanted harmonics and beat frequencies.

One aspect of the present invention is a
departure from the ordinary practice of
firing the controlled rectifiers, such as thyristors,
of the converters in an order which necessarily follows
the phase sequence of a polyphase input applied to the
controlled rectifiers.   It is now proposed that the order of firing be, in general, varied from that phase sequence even though natural commutation is employed. One purpose of this proposal is to enable the output to be synthesised from segments of the input phases and for the frequency of the output to be controlled by a particular programme for firing. Another aspect of the invention is the provision of a programmed and preferably programmable sequence controller, which may conveniently comprise a microprocessor. This provision facilitates the use of different programmes and a change, which may. be automatic, from one programme to another in order, for example, to change the mean frequency of the output. However, the use of a microprocessor or other form of programmed sequence controller provides other benefits even if the cycloconverter is used, especially at low frequencies, as are known cycloconverters.

In order to explain the invention in greater detail, reference will be made to the accompanying drawings, in which:-

Figure 1 is a diagram of the principal parts of a six-pulse cycloconverter connected to drive an A.C. machine;

Figures 2 and 3 illustrate current and voltage wave forms in a six and twelve-pulse cycloconverter respectively;

Figures 4 and 5 illustrate waveforms in a six-pulse and twelve-pulse cycloconverter respectively, operating at a higher frequency than the frequency to which Figures 2 and 3 relate;

Figure 6 illustrates a control network, including a microprocessor, suitable for control of part of the cycloconverter illustrated in Figure 1; and

Figures 7 to 10 illustrate various waveforms which may be caused to occur in the cycloconverter of Figure 1 when it is controlled by the network shown in Figure 6.

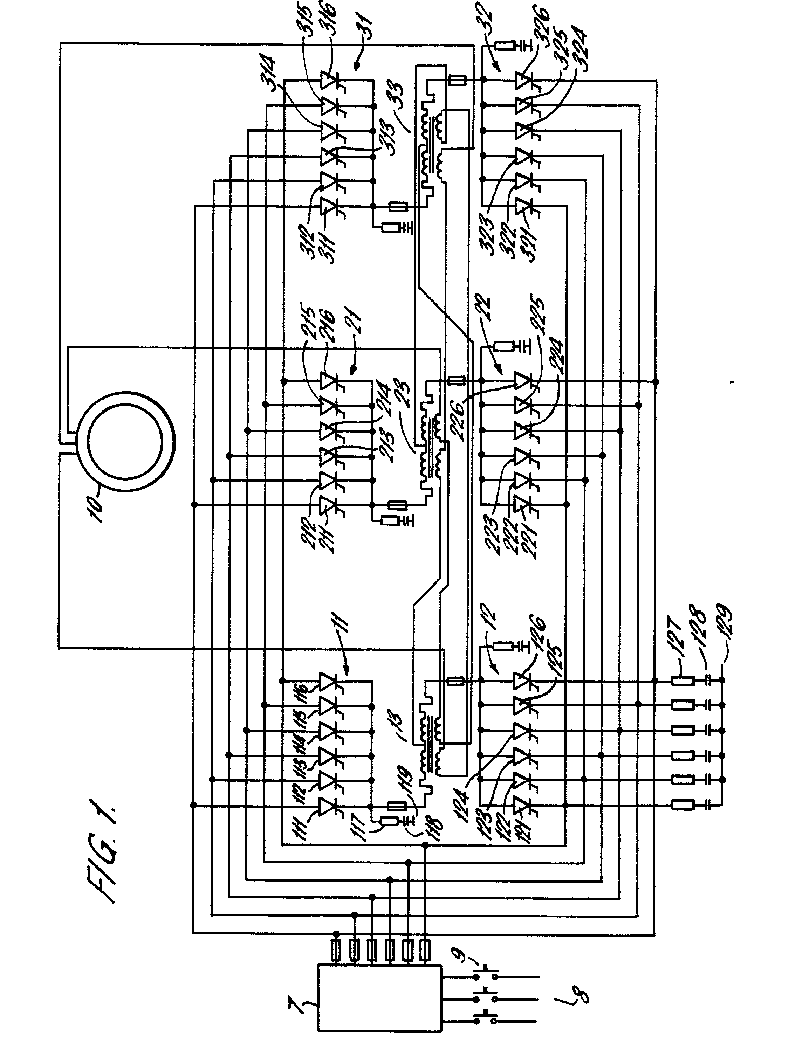

Figure 1 illustrates a six-pulse cycloconverter arranged to feed a squirrel-cage induction motor. This particular form of cycloconverter is given merely by way of example. It requires no detailed explanation to those familiar with the art but a brief explanation follows.

The illustrated cycloconverter, which in effect comprises three interconnected six-pulse cycloconverters each of which provides a single phase output for one of the phases of an induction motor 10, receives a six-phase input supply on respective lines 1 to 6. These phases are fed by a transformer 7 which receives a three-phase input on lines 8 through circuit breakers 9. Each cycloconverter comprises a "forward" or "positive" converter and a "reverse" or "negative" converter which are connected in parallel to the respective load phase. The first cycloconverter comprises the forward converter 11, which consists of six thyristors 111 to 116, or other controlled rectifiers, each connected across one phase of the supply; the negative converter 12 associated with the converter 11 comprises the six thyristors 121 to 126 likewise connected, in a reverse manner, across a respective phase of the input supply. The two converters are connected in parallel to the load by means of a transformer 13, which constitutes a circulating current reactor. The second phase of the output is provided by the cycloconverter constituted by the forward converter 21, comprising thyristors 211 to 216 and the negative converter 22, constituted by the thyristors 221 to 226, likewise connected to the respective phase of the load by means of the transformer 23. The third phase of the output is provided by the cycloconverter comprising the positive converter 31, constituted by the thyristors 311 to 316, and the negative converter 32 constituted by the thyristors 321 to 326, connected in parallel to the respective phase of the load by the transformer 33. In this particular embodiment of the invention there is,

a connection of the midpoint of each primary of each transformer to a secondary winding on each of the other two transformers.

For the converter 11 the thyristors are connected in common through a resistor 117 and a capacitor 118 to an artificial star point 119. All the input phases are connected through respective resistors in the set 127 and respective capacitors in a set 128 to a further artificial star point 129.

The aforementioned cycloconverter is, with the exception of the particular connection of the transformers, of a generally known form. In ordinary practice the firing of the individual thyristors may be controlled by a respective cosine wave which is compared with a reference voltage varying at the desired output frequency so as to provide cyclic modulation of the firing angles of the thyristors in each converter.

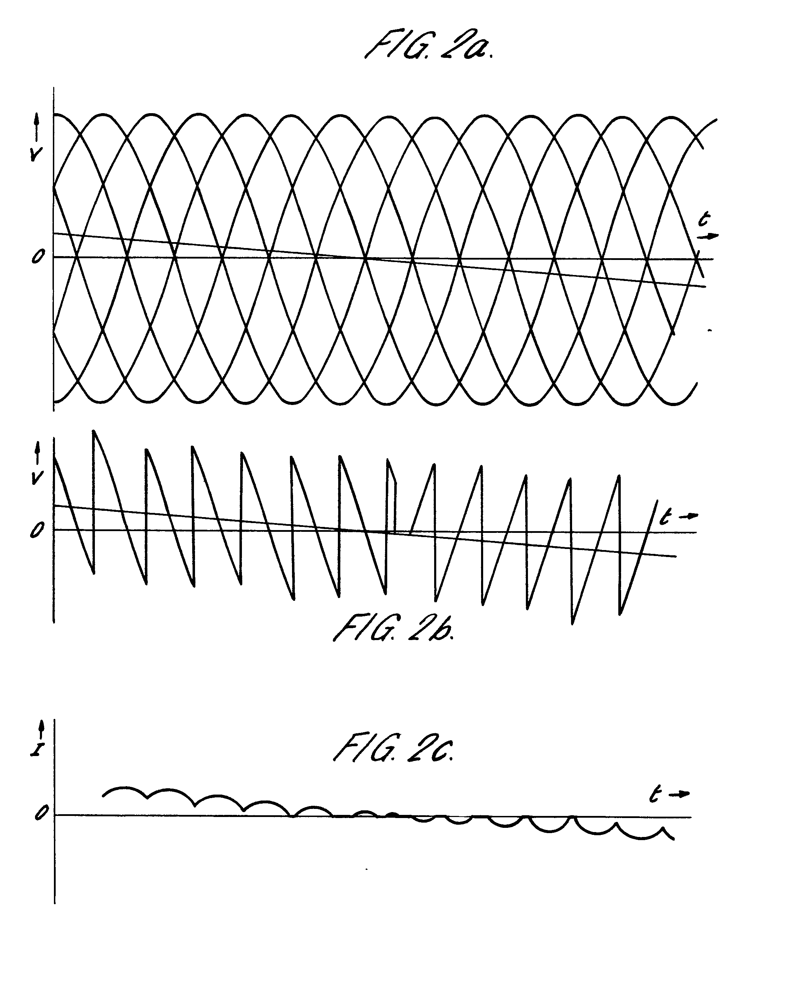

Figure 2 illustrates various waveforms occurring in a six-pulse cycloconverter operating, in ordinary manner, with no circulating current and ideal zero current switching. Figure 2(a) illustrates the six-phase input, at 50 Hz, and a 2 Hz reference voltage. Figure 2(b) illustrates the waveform of the actual voltage obtained at the output; it consists of segments of the input supply phases in order and varies about a mean, which varies according to the reference voltage, and which is the desired voltage of frequency 2Hz.    The particular waveform is produced by means of logic changeover of a cycloconverter and for the particular waveform, the first thyristor in the positive converter and the fourth thyristor in the negative converter did not fire immediately because the polarities of the anode/cathode voltages were not in a direction appropriate for conduction of the respective thyristors when the changeover logic enabled them to fire.    In a cycloconverter arranged for circulating current they would have fired in the same way as the other thyristors. It should be made clear however that in neither example can the order of possible firing be changed.

Figure 2(c) illustrates a typical current waveform for the conditions indicated by Figures 2(a) and 2(b).

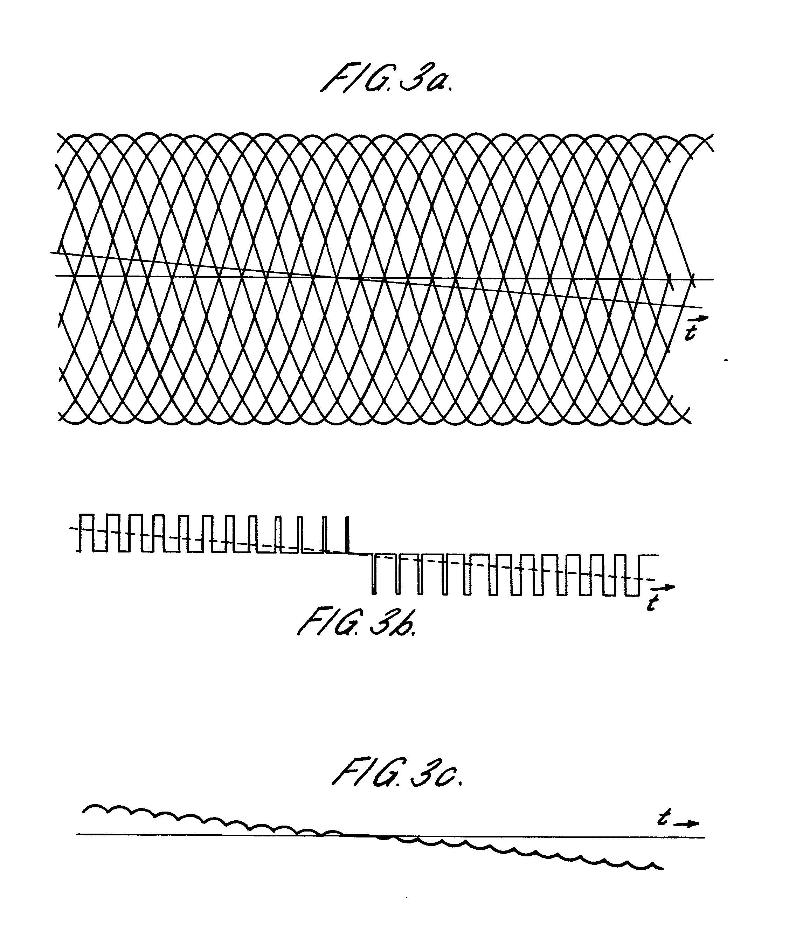

For the sake of comparison, Figure 3 illustrates waveforms, corresponding to those in Figure 2, for a twelve-pulse converter operating at the same input frequency and the same output frequency.

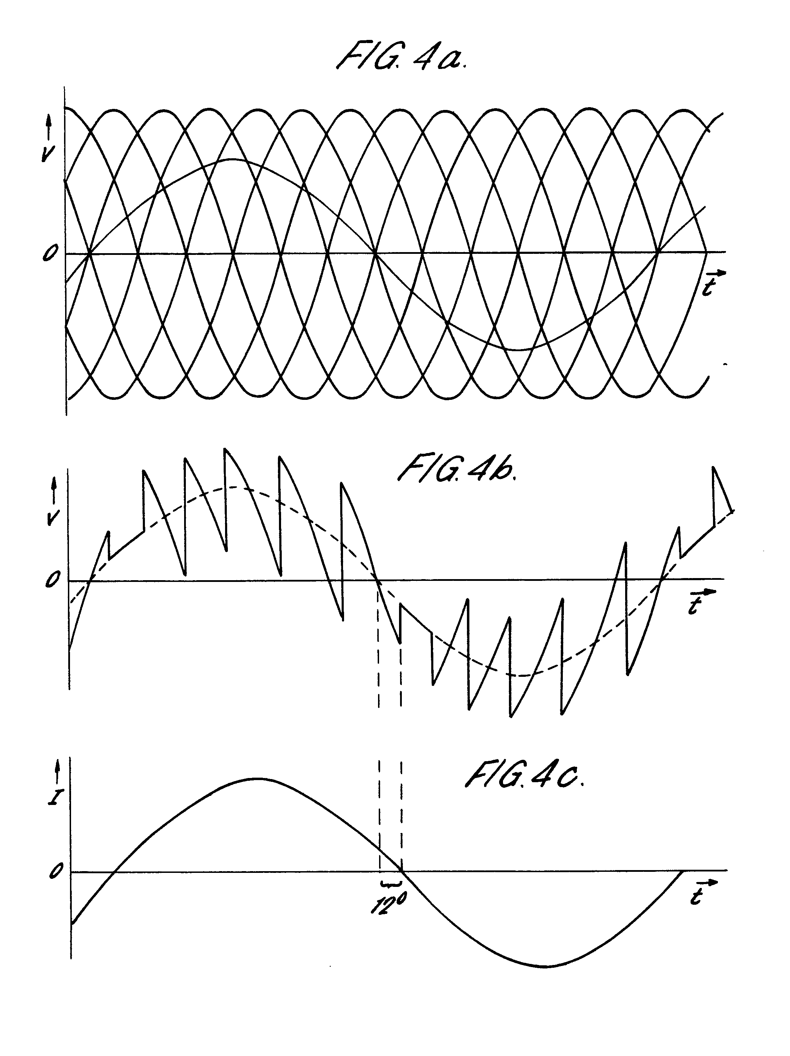

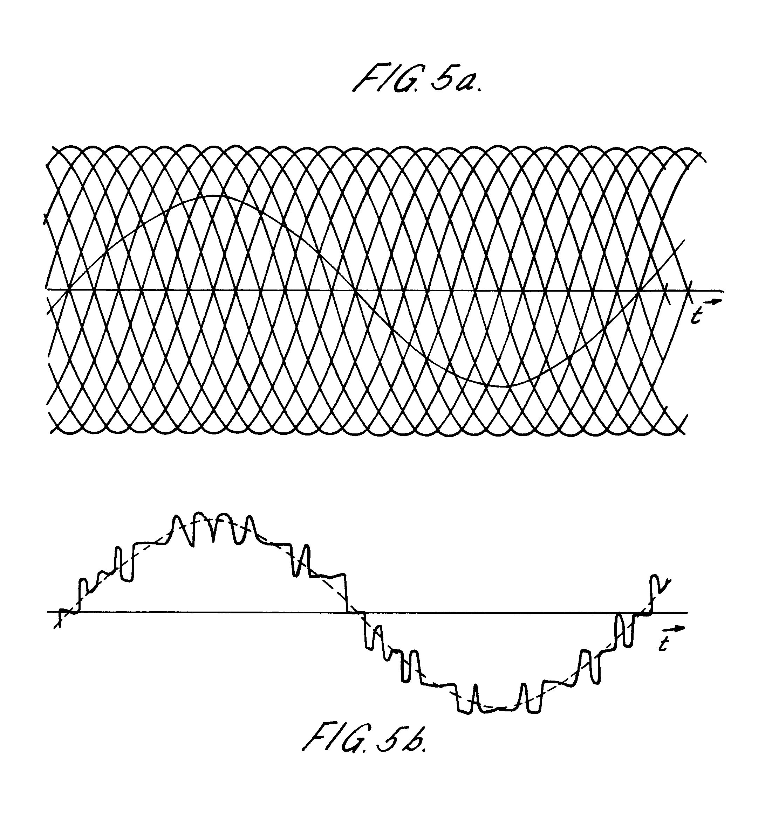

By way of further comparison, Figure 4(a) illustrates the input phases and reference voltage for a six-pulse cycloconverter operating with no circulating current at an input frequency of 50 Hz and an output frequency of 25 Hz, Figure 4(b) illustrates, in solid line, a theoretical unfiltered voltage waveform for the cyclo-converter, the output current lagging the output voltage by $12^{O}$, and in the dashed line the desired voltage waveform, and Figure 4(c) illustrates an ideal output current waveform. Figure 5(a) illustrates the input phases and the reference voltage for a twelve-pulse cycloconverter operating with circulating current at an input frequency of 50 Hz and a desired output frequency of 25 Hz. Figure 5(b) illustrates in a solid line the theoretical unfiltered voltage waveform, for a current lag in the output of $12^{O}$, and in the dashed line, the desired output voltage waveform.

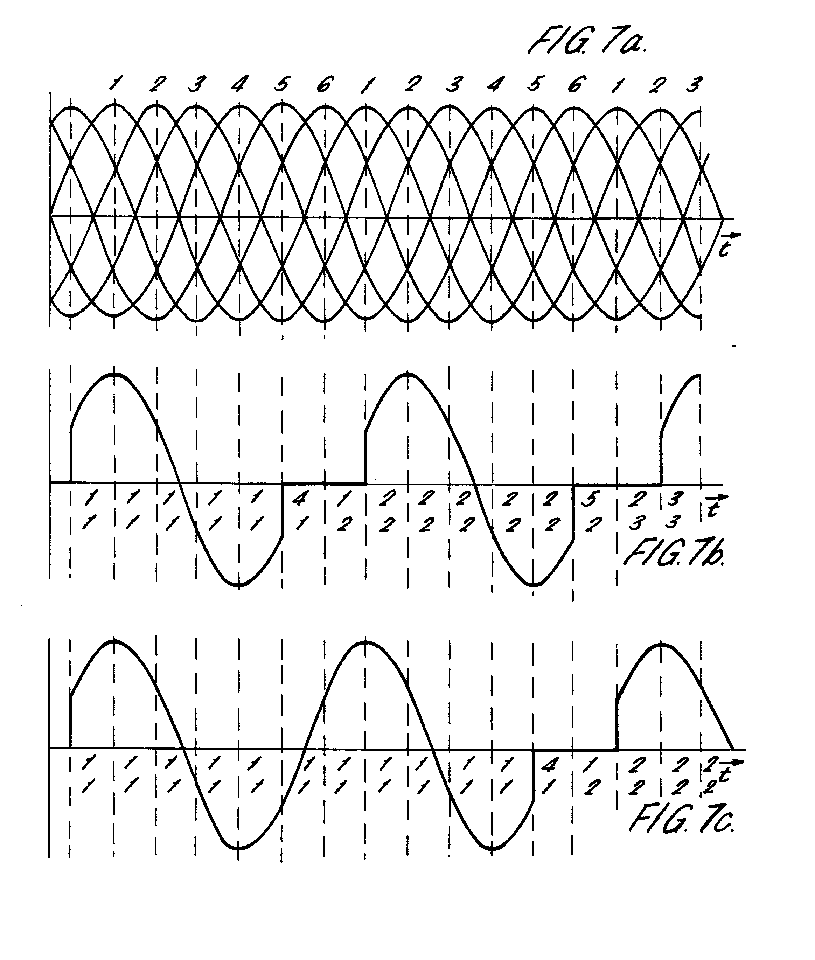

The waveforms illustrated in the Figures 2 to 5 are provided only by way of comparison with Figures 7 to 10, which will be explained later. For an explanation of the important features of the waveforms and the operation of cycloconverters generally, reference may be made to "Thyristor phase controlled converters and cycloconverters" by B.R. Pelly (John Wiley & Sons, 1971).

The order and timing of the firing of thyristors in a cycloconverter of ordinary form ensures that the thyristors always commutate to the next phase no matter what the phase angle of firing is, within limits appropriate to the maximum available voltage.

003046

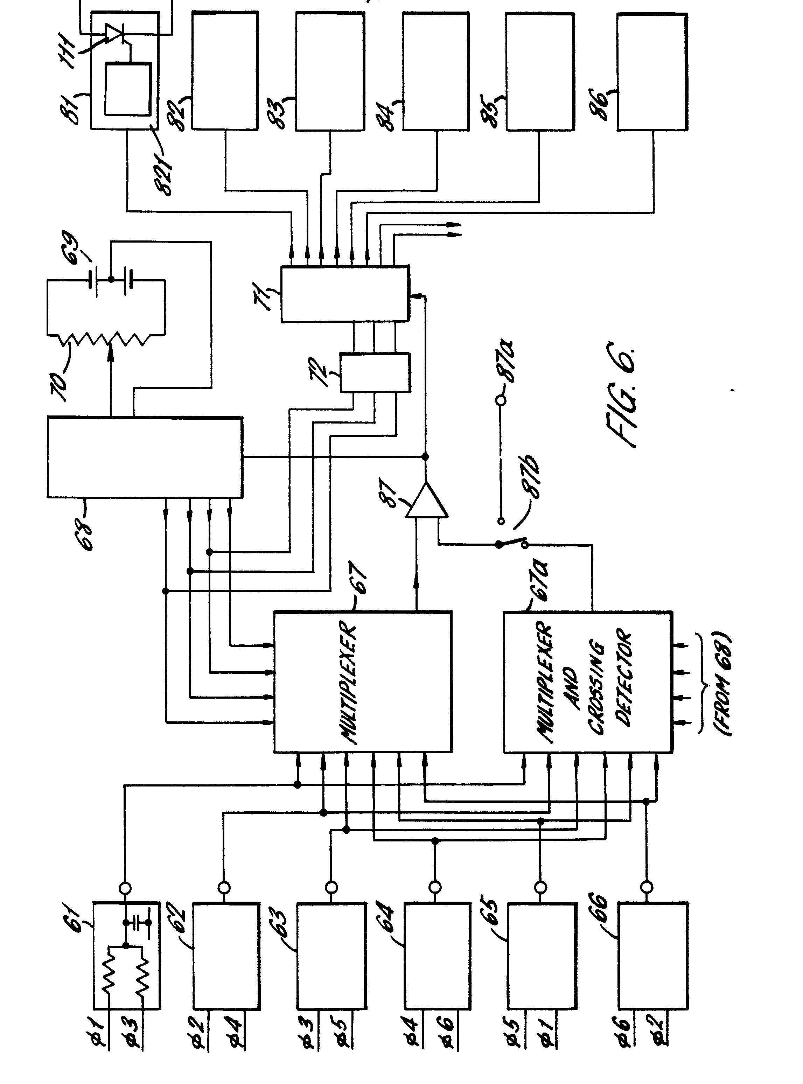

Now let there be considered a six-pulse cycloconverter delivering zero voltage. The sequence of firing, on the assumption that the numeral applied to each thyristor corresponds to the correspondingly numbered phase of the supply, is such that, for example the second thyristor in the positive bridge is fired in the same interval as the fifth thyristor in the negative bridge. If, in this interval, the second thyristors were fired in both bridges, the output of the cycloconverter would be connected via back-to-back thyristors to the second phase of the supply, thus changing the output from zero or the mean to the supply voltage. Thereafter it is possible, for example, to fire the thyristors in an order which provides a zero voltage D.C. output. It is accordingly possible to change the output from segments of waves at the input frequency to direct current and back again at least at frequency corresponding to the phase spacing of the input phases. It will be seen that the thyristors are for this purpose, necessarily fired in an order which not determined by the order in which the input supply phases are applied to the thyristors. It is accordingly not feasible to use ordinary methods of determining the firing sequence but it is possible to use a programmed sequence controller, such as a microprocessor, which stores at least one programme that determines the required order of firing; this will be further explained with reference to Figure 6. However, reference will first be made to the remaining Figures to illustrate some of the possible waveforms that may be produced by an appropriate choice of the order of firing of the thyristors.

Figure 7(a) illustrates the input phases in the usual way. Figure 7(b) illustrates a waveform and the phase number of the forward and reverse thyristors which are fired in any given interval. For the first five intervals shown, the first thyristors are fired, or kept in conduction, so that the output wave follows the first phase of the supply. In the sixth interval, the fourth thyristor in the forward converter is fired so that the output reverts to D.C. In the next interval the first thyristor in the forward converter and the second thyristor in the reverse converter is fired so that the net output remains at zero. In the next five intervals the second thyristors in each bridge are fired and the output wave follows the second phase of the supply. In the subsequent interval the fifth thyristor in the forward bridge and the second thyristor in the reverse bridge are fired so that the output reverts to zero, which continues for the next interval and, by firing of the third thyristors in each bridge reverts to the third phase of the supply and so on. It will be noticed that this process changes the effective frequency of the output from the mains frequency to a frequency which is determined by the choice of the duration of the intervals of direct current between the partial cycles of mains frequency.

Figure 7(c) illustrates the production of a frequency which is closer to the mains frequency, the intervals of direct current occurring more rarely.

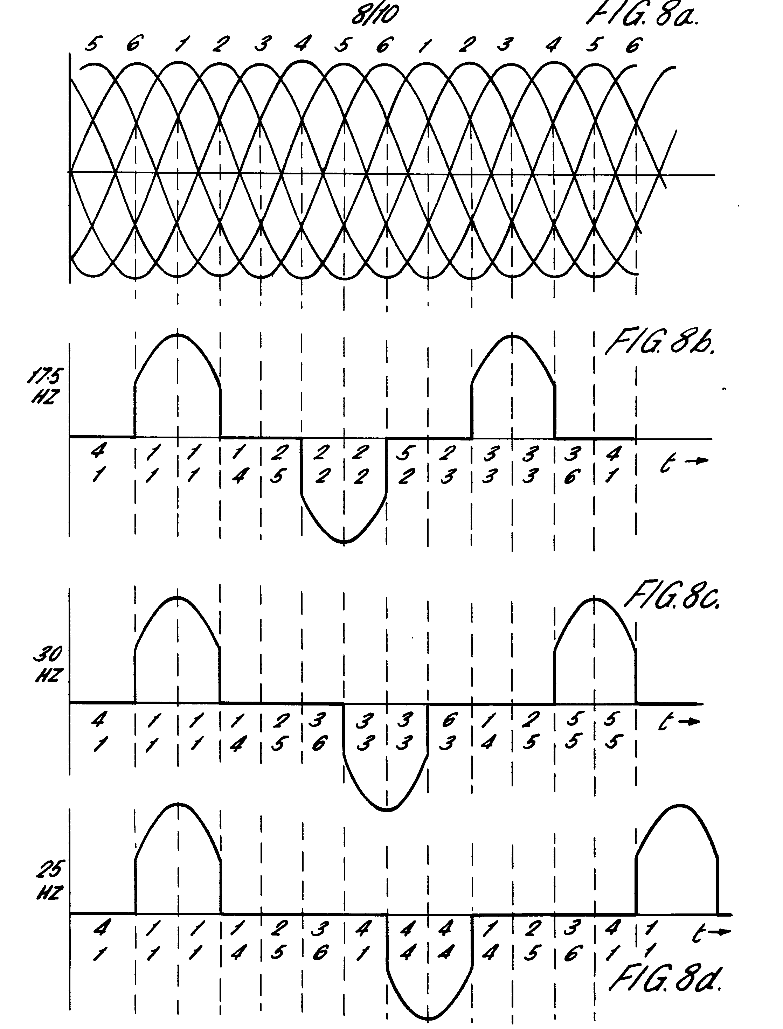

Figure 8 illustrates different orders of firing. Figure 8(a) illustrates the input phases as before. Figure 8(b) illustrates intervals in which an input phase is followed by the firing of the corresponding thyristors followed by intervals in which a D.C. output is produced. Again, by choice of the duration of the D.C. output, the frequency of the output may be varied and Figures 8(b) to Figure 8(d) illustrate the production of output frequencies of 37.5 Hz, 30 Hz and 25 Hz from a 50 Hz input supply.

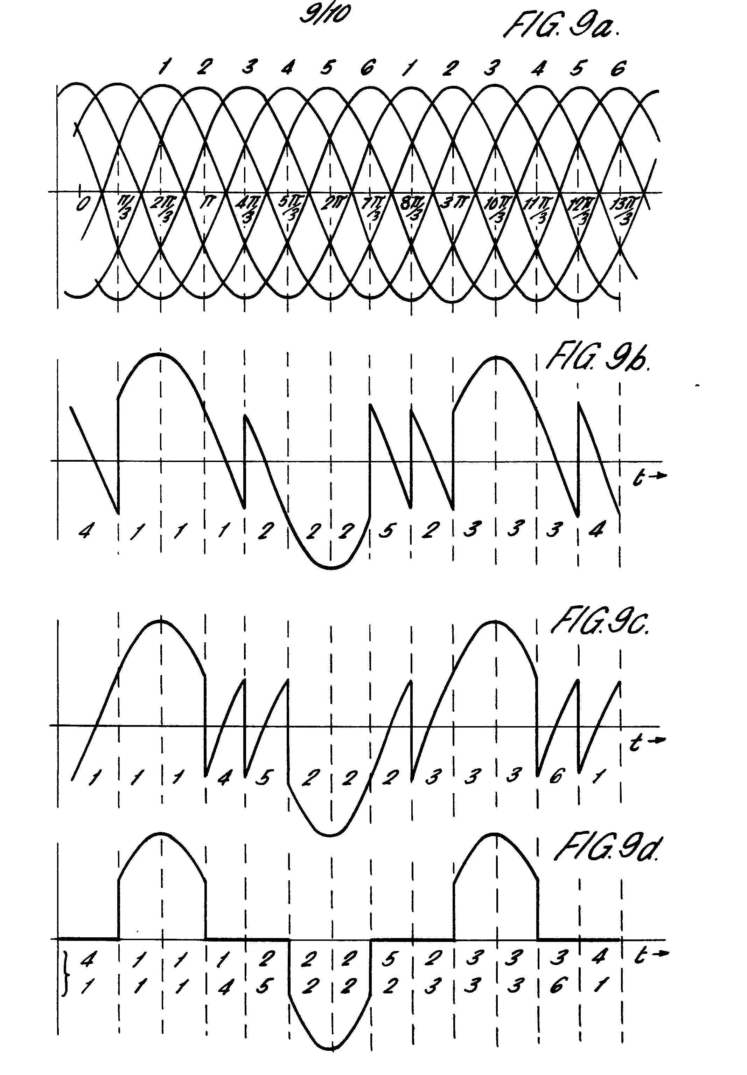

Figure 9 illustrates how the output waveform is a combination of the outputs obtained from the forward and reverse converters. Figure 9(a) illustrates the input phases and Figures 9(b) and 9(c) the voltage waveforms at the outputs of the forward converter and reverse converter respectively, the numbers in each

-11-                              0030468

interval representing the phase number of the
thyristor which is fired.   It will be seen that,
for example, in the fourth interval, in which the
first thyristor of the forward converter and the fourth
thyristor of the reverse converter have been fired,
the forward converter follows the first phase and the
reverse converter follows the fourth phase, which is
in anti-phase to the first, of the supply, and that the
average output is zero.  Figure 9(d) illustrates the
resultant average of the outputs of the forward and reverse
converters for an output which is at two thirds the
frequency of the input supply.

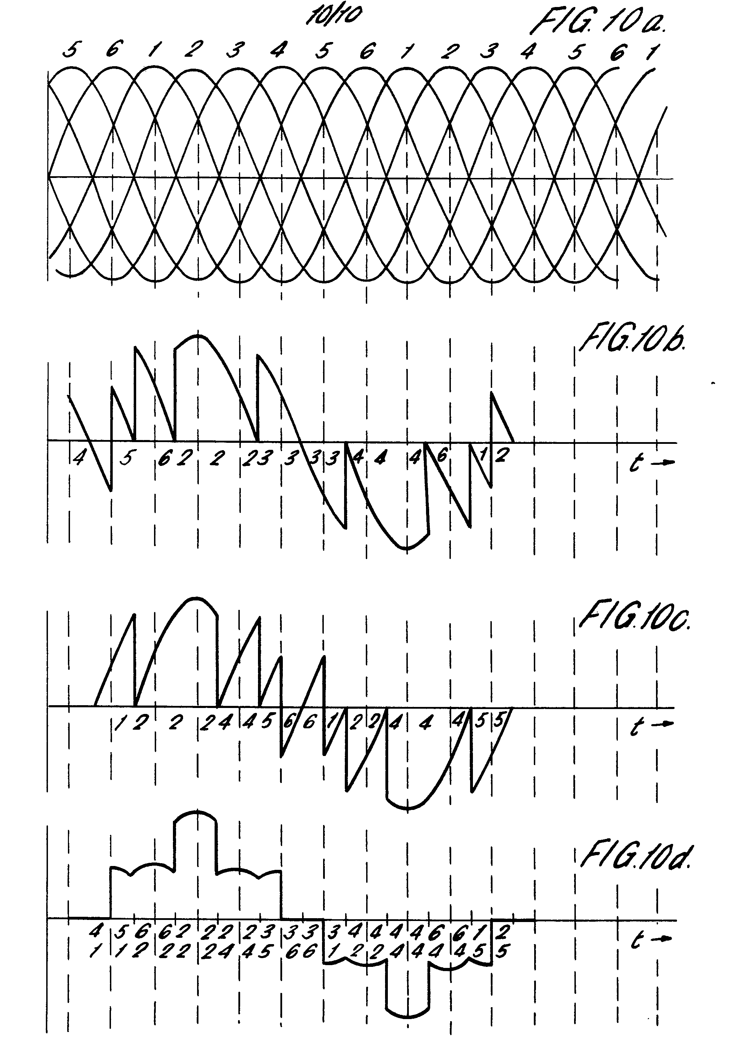

Figure 10 illustrates another firing scheme.
Figure 10(a) shows the input phases, Figures 10(b) and
10(c) show the output voltage of the forward and reverse
converters, the numerals indicating the thyristors which
are fired in the respective intervals, and Figure 10(d)
illustrates the average of the outputs of the forward
and reverse converters.   This output is  markedly
non-sinusoidal.

It may be noted that the thyristors will not "naturally"
commutate if the instant for commutation is near to
a crossing point of the waves because there will not be
enough voltage difference to cause commutation of the
regenerative thyristor.   In general the best position
for natural commutation is halfway between the crossing points of the waves. The instants should be spaced away from the crossing points of the supply waveforms and are preferably determined by the times when selected cosine timing waves cross.

An ordinary cycloconverter can be modified, as will be explained, to operate in accordance with the foregoing, by changing the order of firing of the thyristors in accordance with the particular frequency and voltage which are desired. One manner of controlling the thyristor firing scheme is to use a microprocessor which has recourse to "lookup tables." for firing sequences for different waveforms and firing the thyristors accordingly. Of course, the microprocessor may also be used to control the cycloconverter in the normal way. In practice, it may be desirable, particularly for the control of an induction motor, to control the firing of the thyristors in the cycloconverter in accordance with the normal sequence or even by ordinary phase control, up to a convenient frequency of which the period is short compared with the time constant of the driven motor. Then a changed order of firing is effected and according to the various programmes of firing, the output may be increased in steps of frequency and, if desired, voltage up to the maximum voltage and frequency available from the supply. The voltage can be controlled independently of the frequency by appropriate choice of the segments of the input waveform.

It will be apparent that if the output is synthesised from complete waves or half waves of the input frequency, at least one interval of D.C. commutation is required between successive waves or half waves. There are three intervals, that is to say intervals between successive phases of the supply, in a six-pulse system and the maximum frequency of a six-pulse system is the mains frequency. If however a twelve-pulse system is used, there are six intervals in a half cycle and, using three, four, five and six intervals respectively of D.C. commutation it is possible to synthesise output frequencies of (for example) 100, 75, 60 and 50 Hz, that is to say at twice, one-and-a-half, one-and-a-fifth and unity times the supply frequency.

Reference will now be made to Figure 6 to illustrate how the invention may be put into effect.

As has been explained with reference to Figure 1, the particular cycloconverter comprises three similar converter circuits. Each converter circuit provides an output voltage to the motor which is appropriate to the desired instantaneous motor voltage. For a constant speed the supply to the motor will be three sine waves of frequency corresponding to the desired speed.

The control network for one of the converters in each of the three cycloconverters is shown in Figure 6. It will be understood that a corresponding circuit is provided for the negative converter and that further pairs of control networks may be required for the other converters of the system.

The particular embodiment in Figure 6 employs a cosine wave crossing system for the control of the instants of firing. For the thyristor 111 there is provided a timing wave circuit 61 which receives the first and third phases of the supply through equal resistors, the circuit including a shunt capacitor in order to integrate the difference between the input phases and provide a timing wave which is $30^{\circ}$ in advance of the first supply phase. In like manner the timing wave circuits 62 to 66 are provided for thyristors 112 to 116.

The various timing waves are available at the input of a multiplexer which is in effect a controllable selector 67 under the control of a microprocessor 68. This microprocessor receives a speed command signal from a circuit comprising a D.C. source 69 and an adjustable potentiometer 70. The microprocessor 68 is also coupled to set a bank of addressable latches 71 through optical coupler 72. Whichever latch is set causes, when an enabling signal is received, the firing of a respective one of the thyristors by means of a gating circuit 82 which includes a respective amplifier 821 and which includes, for convenience, an illustration of the respective thyristor 111.   Respective gate circuits 82 to 86 are provided for the thyristors 112 to 116 respectively.

For convenience, it will be supposed that the thyristor to be fired first is thyristor 111 connected to the first phase of the supply.   The operation of the control network shown in Figure 6 is then as follows.

Normally, the power would be switched on to the microprocessor and the timing wave circuits before it is switched to the thyristors of the cycloconverter in order that any switching transients in the control network may die out.   In the first step of that part of the programme of the microprocessor which determines the order of firing, the microprocessor addresses the addressable latch which is associated with the thyristor 111 connected to the first phase of the supply.   It also addresses the multiplexer 67 so that the timing wave for the respective thyristor is selected from the six timing waves that are available and is fed out to one input of the comparator 87.   A reference D.C. voltage, conveniently called firing command voltage, is connected from a terminal 87a to the other input of the comparator.   The instant of firing is determined by correspondence of the timing wave and the command voltage and, when this occurs, the comparator 87 generates an enabling signal, in the form of a pulse, which fires the respective thyristor and instructs the microprocessor to address the multiplexer and latches in accordance with the next step of the programme. For ordinary operation of a cycloconverter, the next thyristor to be fired would be that connected to the second phase of the supply, but as has been explained in the foregoing, - it may in general be any of the thyristors. The positive and negative converters are controlled in like manner except that the command signals are of opposite polarity.

In order to control the instants of firing so that they are away from the cross-over points of the supply, there is preferably provided an additional multiplexer 67a which is connected to receive the cosine timing waves from the circuits 61-66 and is addressed under the control of the stored programme by the microprocessor 68, which also controls a switch 87b so that the comparator 87 can receive either the firing command as previously described or preferably a firing command from the multiplexer 67a, this multiplexer being arranged in any convenient manner to produce the firing command when the selected cosine timing waves cross each other.

The current circulating in the cycloconverter may be sensed using shunts in each output circuit of each bridge. A gating circuit may produce a D.C. output proportional to the lesser of the two outputs, this lesser output being a measure of the circulating current. The command voltage may be increased or decreased to enable the desired circulating current to flow in accordance with known practice.

Using an ordinary firing sequence, as the output frequency increases beyond a certain fraction of the supply frequency, the harmonic content of the output of the cycloconverter would cause unsteady movement of, for example, a driven squirrel-cage motor. A converter according to the invention tends to provide jerky motion of the motor at low frequencies and smoother operation at higher frequencies. There is an overlap of frequency ranges in which satisfactory operation is available according to different firing sequences and the microprocessor may be readily programmed to change the mode of operation from one firing sequence to another in order to select the best mode of operation for the particular frequency.

It would be convenient to use a single microprocessor for control of all the thyristors and it is a relatively simple matter to ensure that the microprocessor can identify the source of an enabling signal and to change the setting of the appropriate multiplexer and latches accordingly.

When the mode of operation ought to be changed so as to alter the output frequency of the cycloconverter, the microprocessor may jump to a different programme. The microprocessor may include a read only memory containing programmes which define firing patterns for the thyristors as a function of the phase intervals in the power supply wave. For example, for a 25Hz output from a 50Hz supply, there would be twelve intervals or steps in the table for a given desired average output voltage.

Associated with the table of firing sequences would be a table of values for the interval required for that change.   The number of the interval is put into a digital to analogue converter and the analogue signal determines the firing command voltages.   Thus, the firing command voltage, which is normally a sine wave for an ordinary cycloconverter, is a stepped voltage wave having a predetermined sequence of values in accordance with the points at which commutation is required.

The speed command signal is converted to digital number for processing within the microprocessor.   For operation according to an ordinary firing sequence the speed number may be repeatedly added to itself and accumulated in a recycling accumulator which overflows after a convenient number (such as 256) has been reached.   An accumulated number may be used to address a section of read only memory containing, for example, 256 entries of sine and cosine values appropriate to each of the three phases of the motor.   The sine and cosine readings may be multiplied by the speed setting, converted back into analogue form and held in six sample and hold circuits, two for each phase of the motor, so as to provide firing  command D.C. voltages.

When the cycloconverter is used for higher frequencies in a mode of operation in which the order of firing differs from the phase sequence of the polyphase supply, the number representing the desired speed of the motor may be quantised, to the nearest of a plurality of preselected speeds, and provided with a sign bit. If the speeds "number" is within the range used for normal cycloconverter operation, a test of the number will cause the microprocessor to change to the programme defining an ordinary sequence of firing. If a test of the speed number indicates that a high frequency mode on the cycloconverter should be used, the number may be used to address a section of read only memory and thereby to obtain firing sequences appropriate for that particular mode. If a voltage control is required, the desired voltage control setting may be digitised and quantised in the same manner as a speed signal, and used to address sections of read only memory containing different voltage tables appropriate to the sections for speed.

It may be noted that wave forms constructed from half waves followed by zero current inherently have the property required by an induction motor, that is to say that for constant flux the mean voltage must be proportional to frequency. Voltage control is required only to increase or decrease the motor's flux for a given frequency.

- 21 -

0030468

CLAIMS:

1.    A cycloconverter arranged to convert a polyphase alternating current supply into an alternating output at the same or a different frequency and which includes a sequence controller which determines the order of firing of the controlled rectifiers of the cycloconverter and can vary the order of firing of the controlled rectifiers.

2.    A cycloconverter according to claim 1, and including means for restricting the instants of commutation of the controlled rectifiers to those when natural commutate is possible.

3.    A cycloconverter which includes:

(a)    means for providing a timing signal for each controlled rectifier;

(b)    a sequence controller which is arranged to control, at each step of a stored programme, a selector in readiness for an enabling signal which initiates the firing of a rectifier selected by the selector and further arranged to select a particular timing wave for the selected rectifier; and

(c)    means responsive to the selected timing signal to provide an enabling signal and to signal the sequence controller to proceed to the next step of the programme.

- 22 -

0030468

4.      A cycloconverter according to claim 3 in which the sequence controller includes or is associated with a store of two or more programmes each of which defines a respective sequence of firing of the rectifiers.

5.      A cycloconverter according to claim 4 in which at least one stored programme defines an order of firing different from the sequence of the supply phases.

6.      A cycloconverter according to claim 5, in which the said one programme defines an order of firing which enables the cycloconverter to provide an output synthesised from parts of the input supply waveform interspersed with intervals of zero frequency current.

7.      A method of operating a cycloconverter which receives a polyphase input supply and includes controlled rectifiers fed by respective phases of the supply, in which method the order of firing of the thyristors is controlled otherwise than in the phase sequence of the supply in order to produce outputs of selected forms.

8.      A method according to claim 7, in which the cycloconverter is controlled to operate in at least two different modes, in one of which the firing sequence is in the phase sequence of the supply and in the other the firing sequence is otherwise than in said phase sequence.

FIG. 1.

0030468

## FIG. 2a.

## FIG. 2b.

## FIG. 2c.

FIG. 3a.

$t$

FIG. 3b.

$t$

FIG. 3c.

$t$

## FIG. 4a.

## FIG. 4b.

## FIG. 4c.

*FIG. 5a.*

*FIG. 5b.*

0030468

FIG. 6.

0030468

FIG. 7a.

FIG. 7b.

FIG. 7c.

0030468

FIG. 8a.

8/10

FIG. 8b.

FIG. 8c.

FIG. 8d.

0030468

FIG. 9a.

FIG. 9b.

FIG. 9c.

FIG. 9d.

FIG. 10a.

FIG. 10b.

FIG. 10c.

FIG. 10d.

0030468

10/10

| | DOCUMENTS CONSIDERED TO BE RELEVANT | | CLASSIFICATION OF THE APPLICATION (Int. Cl.³) |
|---|---|---|---|
| Category | Citation of document with indication, where appropriate, of relevant passages | Relevant to claim | |
| X | IEEE TRANSACTIONS ON INDUSTRIAL ELECTRONICS AND CONTROL INSTRUMEN-TATION, vol. IECI-25, no. 2, May 1978, pages 155-163 New York, U.S.A. M.F. MATOUKA: "Read-only memory (ROM) trigger generator for phase-controlled cycloconverters"  * Whole document * | 1,3-8 | H 02 P 13/30 |
| X | IEEE TRANSACTIONS ON INDUSTRIAL ELECTRONICS AND CONTROL INSTRUMEN-TATION, vol. IECI-24, no. 3, August 1977, pages 226-230 New York, U.S.A. H.H. CHEN: "A microprocessor con-trol of a three-pulse cyclocon-verter"  * Whole document * | 1,3-8 | **TECHNICAL FIELDS SEARCHED (Int. Cl.³)**  H 02 P 13/30 H 02 M  5/27     1/08 H 02 P  7/62 |

**CATEGORY OF CITED DOCUMENTS**

X: particularly relevant
A: technological background
O: non-written disclosure
P: intermediate document
T: theory or principle underlying the invention
E: conflicting application
D: document cited in the application
L: citation for other reasons

&: member of the same patent family, corresponding document

The present search report has been drawn up for all claims

| Place of search | Date of completion of the search | Examiner |
|---|---|---|
| The Hague | 26-02-1981 | BERTIN |

EPO Form 1503.1  06.78